# EUROPEAN PATENT SPECIFICATION

(11) **EP 3 812 189 B1**
(45) Date of publication and mention of the grant of the patent: **26.03.2025**
(21) Application number: 20203522.6
(22) Date of filing: 23.10.2020
(51) Int. Cl.: B60K 6/12, B60K 6/48, B60K 6/52, B60K 7/00, F16D 3/00

(54) **MOTOR VEHICLE**
KRAFTFAHRZEUG
VÉHICULE À MOTEUR

(30) Priority: 25.10.2019 IT 201900019788
(43) Date of publication of application: 28.04.2021
(73) Proprietor: The Challenge Srls, 39057 Appiano Sulla Strada del Vino BZ (IT)
(72) Inventor: GATTI, Antonio, 39057 APPIANO SULLA STRADA DEL VINO BZ (IT)
(74) Representative: Vatti, Francesco Paolo

(56) References cited:
- EP-A1- 2 873 827
- DE-A1- 102018 009 705
- US-A1- 2014 053 541
- US-A1- 2014 091 736
- US-A1- 2019 056 026
- US-B1- 6 321 865
- US-B1- 9 855 835

## Description

The present invention relates to a motorvehicle, preferably a heavy motorvehicle, such as a lorry with trailer, with special preference, even though not exclusively, to an articulated lorry, which provides a reduction of consumptions and/or a performance increase.

After the invention of the internal combustion engine in 1853 and of the diesel engine in 1892, the industrial application thereof has revolutionised and conditioned to a great extent the life of human kind. The travel opportunities at relatively low prices given by these inventions have allowed to widen travel opportunities in a before unthinkable manner, extending travel to people who could not afford it before and giving the others the opportunity to increase their journeys, also reducing by a great extent the time necessary therefor.

As well as the recreational use and the use for people, the use of internal combustion engines has found a remarkable application for the transport of goods, especially with vans, lorries and lorries with trailer.

Lorries with trailer are divided mainly into two categories: with hooked trailer and articulated vehicles.

Vehicles with hooked trailer consist of a lorry, whereto a trailer is connected through a joint, the trailer normally being of a size similar to those of the driving lorry.

Vehicles with hooked trailer consist of a tractor, comprising an engine compartment, a driver compartment, four wheels and a junction plane, as well as a semitrailer, consisting of a hopper, equipped with wheels on the side opposite to the one to be connected to the tractor and of an adjustable connection, to join the semitrailer to the tractor. For the sake of explanation completeness, it is added that the tractor is perfectly capable of travelling without semi-trailer, while the semitrailer can be adapted to other tractors, which is often the case, for example when loading-unloading motorvehicles on a ferry boat, where a service tractor is used in the port to transport the semitrailer - possibly left in the area for medium to long times - onto the ship or into the warehouse.

One of the aspects which, over time, is becoming more and more important as regards the use of motor vehicles in general is the problem of energy consumption. When internal combustion engines were invented, the normally used fuels were cheap and widely available; moreover, being vehicles few, the environmental pollution deriving from their use was on the whole virtually negligible or it could be considered as such. The just described great versatility of motor vehicles led to a remarkable popula-risation thereof, so that energy consumption have started to become a problem and environmental pollution has become appreciable, especially in certain locations, often linked to substances not burnt or to incomplete combustion products. The two problems are closely interconnected, since a higher consumption normally corresponds to higher pollution levels.

For these reasons it has been attempted to increase the yield of engines with various trucks and consumption has gradually diminished.

The yield of internal combustion engines can improve thanks to various technical trucks. A first step was made working on the aerodynamics of vehicles: better aerodynamics means less viscous friction, which lowers consumption. A number of motor vehicles today have a lower wedge shape than in the past, which allows smaller consumption caused by this type of friction. For obvious reasons, this improvement is very difficult for lorries and lorries with trailer, also since, for safety reasons, it is suitable that the driver sits high up, in order to be able to see traffic early and clearly. Some fixed devices have been installed, such as spoilers, for example on the roof of tractors, but it is evident that the savings in the field of motor transport of goods is still minimal today.

Another step forward was made with the the affirmation of injection engines (which have by now virtually fully superseded carburettor ones), which allow a more complete fuel combustion, with higher yields.

However, a really important progress in the technology consists of so-called hybrid vehicles.

Generally, under hybrid vehicles it is understood vehicles mounting two motors, an internal combustion engine and an electric motor. In the majority of cases, the internal combustion engine is a petrol engine, but diesel engines are also being researched. The two motors are controlled by a suitable control unit.

Hybrid motors are manufactured in multiple types, depending on how the electric motor and the internal combustion engine are coupled.

The so-called minimum hybridation vehicles are not hybrid vehicles in a strict sens. They are vehicles wherein the system of use, management and production of electric energy is optimised, so as to remarkably reduce fuel consumption in the production of the electric energy necessary for the accessory functions of the vehicle. Among these technologies is the Start and Stop, which provides engine stop upon vehicle stops: for relatively long stop, this saving becomes important.

The integrated start generator provides a synchronous electric motor, arranged between the thermal engine and the gearbox, which performs the functions of start motor and of alternator/generator, so as to assist the internal combustion engine in case of need and to retrieve electric energy. This motor can hence give a higher thrust to the thermal engine, cause the start and stop mechanism to function and accelerate battery regeneration. All these functions allow a dramatic reduction of polluting emissions, normally without reducing vehicle performances.

Light hybridation vehicles provide 48-volt batteries, with the function of imparting thrust in acceleration or whenever necessary and allow driving with the electric motor only for a few hundred meters. Battery loading occurs by retrieving the energy employed in movement and in braking; in this last case, braking is aided by this type of motor which thereby loads the batteries, being more effective.

Finally, there are full hybridation vehicles, which can even have a system for directly charging the batteries (in this case at 400 volt). In general, a central unit detects the charge level of a battery and, if it lies above a certain threshold, the central unit starts the electric motor upon the driver's request. Thereby, the battery tends to discharge and, when the central unit detects that the level is below another threshold, it interrupts the operation of the electric motor and activates the internal combustion engine. The internal combustion engine, however, sets in also whenever the energy requirement exceeds a certain preset threshold.

In any case, whatever motor is working, the vehicle implies a series of devices apt to retrieve part of the energy connected to motion, to charge the batteries. In particular, there are recovery devices of part of the rotation energy of the axles, of the braking energy and others. Thereby, part of the energy, which in standard vehicles equipped with internal combustion engine used to go unused, in hybrid vehicles is utilised instead to allow the electric motor to be charged in order to work, so that in the end less fuel is used, the other conditions being equal, that is, there is a net yield increase and a serious decrease of the contribution to atmospheric pollution.

Another important aspect, especially in heavy vehicles, is that of vehicle traction: on certain terrains, an incorrect traction may lead to a sort of skating, often at the origin of actual bogging down of the vehicle in these terrains. For this purpose, four-wheel drives have been devised, connecting the drive shaft, often through suitable transmission shafts, to all four wheels of a vehicle. Thereby, the slipping of a wheel, for example in mud or on snow, is highly compensated by the movement of the other three wheels, making it easier to remove the vehicle from the dangerous situation.

In actual fact, four-wheel drive vehicles have higher consumption, due to a net increase of the frictions at play; hence a permanent four-wheel drive would greatly decrease the yield of the internal combustion engine, going against what has been researched up until today. Moreover, the prior art devices all provide the use of high-pressure fluids, with all the problems linked thereto and to the management thereof.

US2014/053 541 A discloses methods for the use of compressed gases in motor vehicles, for generating mechanical energy by the expansion of a compressed gas, through a turbo-compressor, to distribute it to the engine, the motor generator or to a wheel. Nothing is stated about the mutual arrangement of the turbo-compressor and the engine.

DE10 2018 009 705 similarly discloses a vehicle with a compressed air reserve, produced by a compressor, electrically actuated with electric energy generated by the kinetic energy of the vehicle. Also this document does not deal with the mutual spatial arrangement of turbo-compressor and engine.

US2019/056 026 discloses a vehicle drive system including a first prime mover, a transmission, a power take-off (PTO), a lubrication system and a control system. Energy recovery devices are present in this prior art document.

EP2 873 827 discloses a vehicle equipped with a compressor, a turbine charger and with a compressed air tank, so as to generate electric energy from compressed air. The compressor, in this patent, is actuated by the vehicle exhaust gases and not by vehicle motion.

US2014/091 736 A discloses an electric vehicle, with a charging device. The electricity is generate by a compressor.

US6 321 865 discloses a four-wheel-drive vehicle, with the engine in axis with the epicycloid gear.

US 9 855 835 discloses a pneumatic drive system for a motorised vehicle, which includes an air compressor that is operable to couple with a main drive shaft of the motorised vehicle so as to activate the air compressor and generate pressurised air during a braking operation of the motorised vehicle, an accumulator that is operable to receive and store pressurised air from the air compressor during the braking operation, and a pneumatic motor that receives the pressurised air from the accumulator to activate the pneumatic motor, which provides energy to the main drive shaft during an acceleration operation of the motorised vehicle.

The problem at the basis of the invention is to propose a motor vehicle structure which overcomes the mentioned drawbacks and which allows to increase the performances and/or to reduce consumption, also in the case of heavy vehicles. This object is achieved through an energy recovery device as described by claim 1.

According to a second aspect, the present invention relates to a motor vehicle, propelled by an internal combustion engine, comprising the energy recovery device described above. The dependent claims describe preferential features of the invention.

Further features and advantages of the invention are in any case more apparent from the following detailed description of a preferred embodiment, given purely as a non-limiting example and illustrated in the attached drawings, wherein:
fig. 1 shows an overall view of an energy recovery means, to be applied in a motor vehicle according to the present invention, in a perspective view;
fig. 2 schematically shows a power take-off unit, to be used in the motor vehicle according to the present invention;
fig. 3 shows, in a perspective view, a turbine to be used in the energy recovery means according to the present invention;
fig. 4 is a schematic, perspective view of a compressor, to be used in the energy recovery means according to the present invention;
fig. 5 is a principle diagram of a first preferred embodiment of the present invention;
fig. 6 is a perspective view of a cogenerator of electric energy, to be used in a motor vehicle according to a second preferred embodiment of the present invention;
fig. 7A and 7B are top and front views, respectively, of a front axle of a motor vehicle according to the second preferred embodiment of the present invention;
fig. 8 shows a side view of the power take-off unit and of the turbocompressor; and
fig. 9 shows a front view of the detail shown in fig. 8.

The present invention aims at combining the use of kinetic energy, produced by the internal combustion engine, with an independent co-generation unit of electric energy.

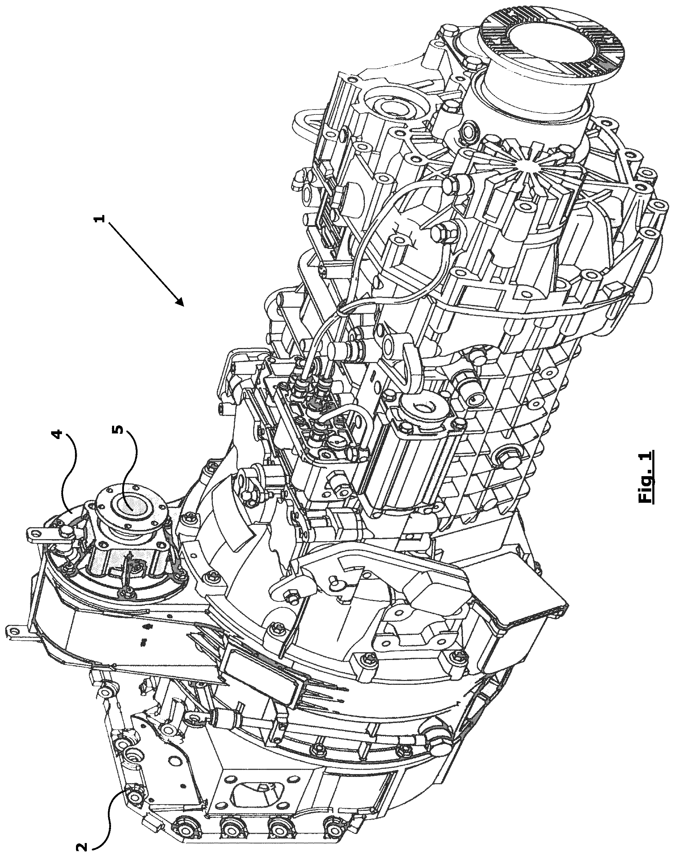

Fig. 1, as seen before, shows an energy recovery means, to be applied in a motor vehicle according to an embodiment of the present invention, preferably a heavy vehicle.

Device 1 is arranged between the fastening 2 to the engine and a clutch. Device 1 has a power take-off unit 4, which can be connected through a joint 5 for fastening to a compressor for compressed air production and/or to a turbine present on the motor vehicle and/or an additional one. Thereby, the compressed air produced by the compressor recovers part of the energy dedicated to the rotation of the motor shaft, with an evident economic and ecological advantage.

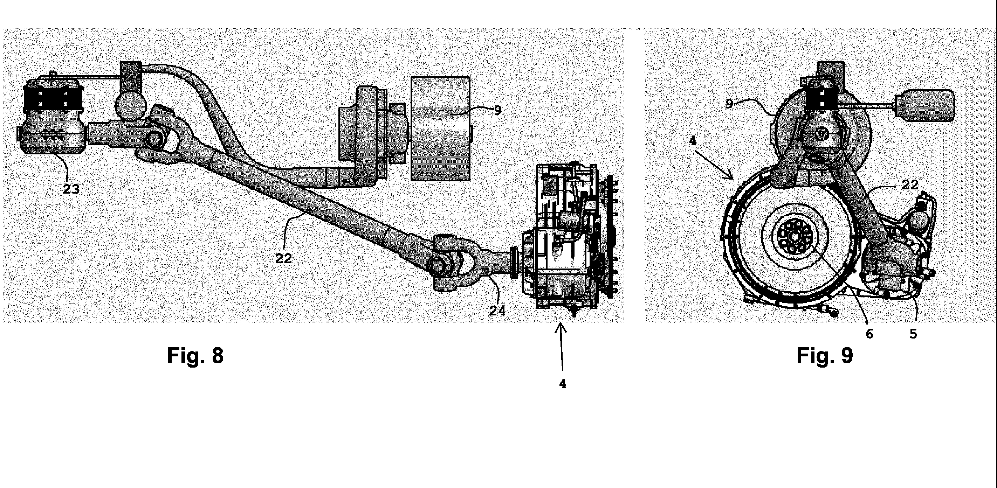

Advantageously, two electric motors are connected to the clutch. According to a particularly preferred embodiment, power take-off unit 4 is arranged between the flywheel and the gearbox, with an angle (which will be better shown in the following, with reference to figs. 8 and 9) ranging between 40° and 80° with respect to the engine, preferably at an angle of 60° with respect to the engine. Thereby, the best results in terms of spatial arrangement, opportunity to adjust the energy recovery system in already existing vehicles and of engine yield are obtained.

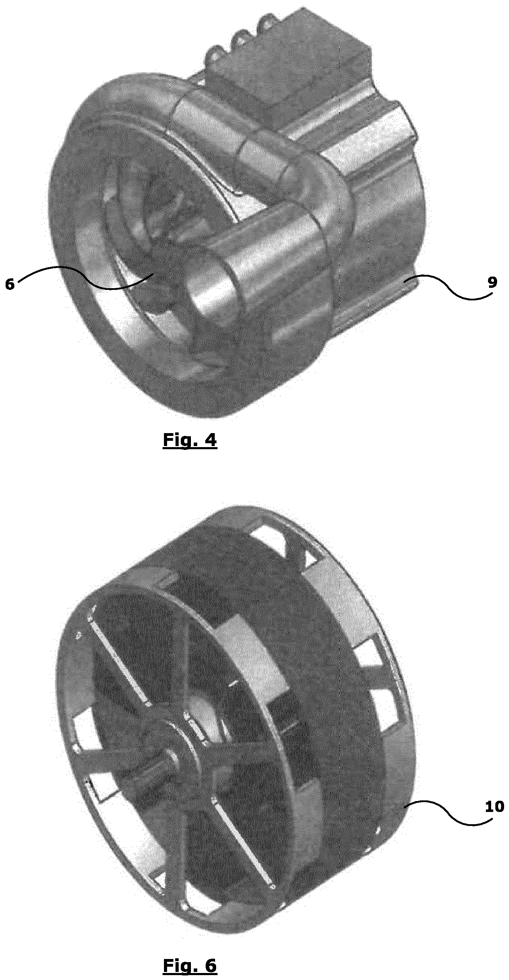

Examining fig. 4, power take-off unit 4 comprises an area 6, also operationally connected to the rotating members of the engine, and joint 5, for the attachment to a compressor and/or to a cogenerator of electric energy. Area 6, generally a transmission, is connected also to joint 5, in a manner known in the art in the field.

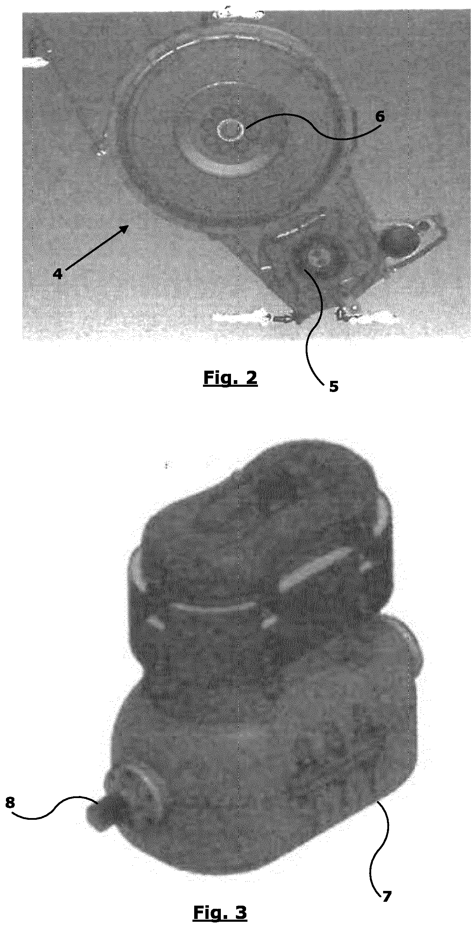

Fig. 3 shows a turbine 7. Turbine 7 receives compressed air from inlet 8, operationally connected to a compressor 9, sche matically shown in fig. 4. Compressor 9 receives the movement from the joint 5 for the fastening of power take-off unit 4. Compressor 9 is preferably a two-cylinder compressor, which allows better yield.

Fig. 6 shows a prior art cogenerator 10, which can generate electric energy due to the action of the compressed air introduced therein, through turbine 7, from compressor 9.

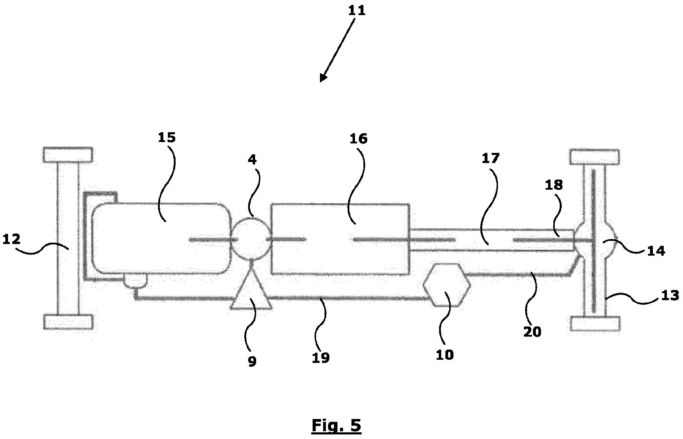

Fig. 5 shows the principle diagram of the motor vehicle, according to a first embodiment of the present invention. Vehicle 11 is shown according to the components thereof, in a purely schematic and general manner. Vehicle 11 comprises a front axle 12, a rear axle 13, which has a suitably motorised prior art differential gear 14. An engine 15, power take-off unit 4, compressor 9, gearbox 16 and a cardan 17 are provided, as well as cogenerator 10. Discontinuous line 18 shows the kinetic energy, imparted to rear axle 13 by the engine 15 which generates it; solid line 19 shows the compressed air supply and line 20 the electric energy supply to an electric motor not, shown and acting on differential gear 14.

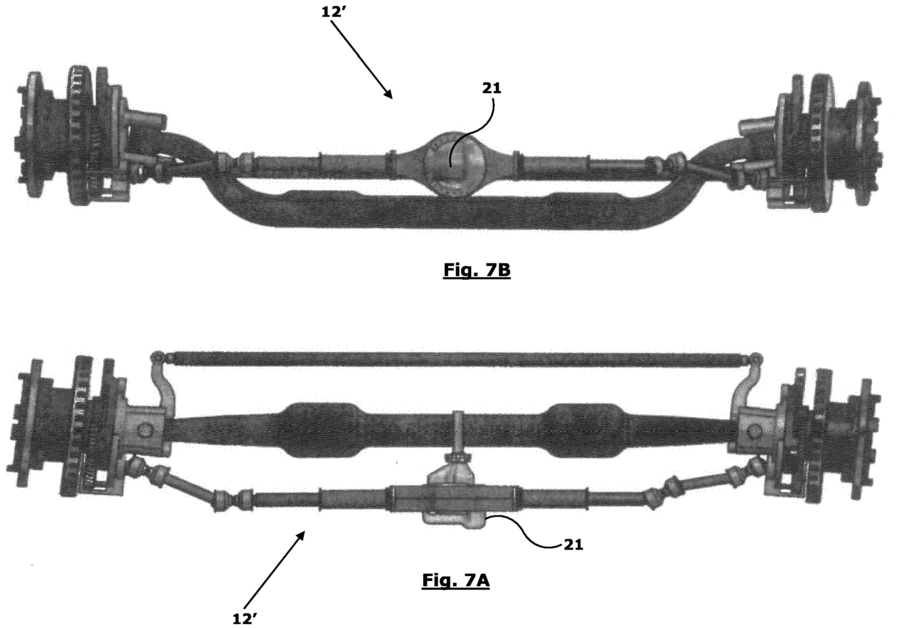

Figs. 7A and 7B show the front axle 12' of a vehicle according to a second preferred embodiment of the present invention. Generally, axle 12' is idle and is driven into rotation by vehicle movement. However, according to this embodiment, an electric motor 21 may act thereon if needed, supplied by the electric energy produced by cogenerator 10.

Finally, figs. 8 and 9 show the connection between attachment joint 5 of power take-off unit 4 and compressor 9. In particular, a cardanic joint 22 is shown, connected to attachment 5 on an own end and with an actuation motor 23 of compressor 9 on the other end thereof. According to the invention, joint 22 forms with an axle 24 an angle α, ranging between 40° and 80°. Preferably, such angle is of 60°.

During the travel of the motor vehicle according to the present invention, the engine keeps the engine shaft in rotation, which causes the clutch to rotate. The rotation of the drive shaft keeps in rotation also the area 6 of power take-off unit 4. In a known manner, such rotation causes, through suitable joints, the rotation of the joint 5 for fastening to compressor 9; the connection occurs by means of cardanic joint 22 and actuation motor 23. Thereby, vehicle travel implies the production of compressed air through compressor 9. Said compressed air will mostly be used for feeding turbine 7 which will convey part of it to the engine and part of it to co-generator 10. Co-generator 10, by rotating pushed by the compressed air, will produce in a known manner electric energy - with a power of about 300 kW -, which can be used immediately or which can be accumulated in a known manner, for example in a suitable accumulator, for a subsequent use. In practice, in general said compressed air is transformed into electric energy which supplies an electric motor, apt to act at least on part of the wheels of motor vehicle 11. The management of the flows of electric energy and compressed air occurs preferably by a system of electronic central units through the use of suitable actuators; the latter are preferably arranged in correspondence of the phonic wheels and of the injection system.

The electric energy produced can have various uses.

According to the embodiment shown in fig. 5, the electric energy produced is immediately used for reducing fuel consumption, as in the case of the integrated start generator or of light hybridation, overfeeding engine 15. Engine 15 works as just described in the general case and, by means of power take-off 4, starts compressor 9, which sends compressed air through pipe 19. Simultaneously, engine 15 causes the drive shaft to rotate in gearbox 16 and, from here with a cardan 17 imparts the kinetic energy 18 to differential gear 14 which causes the wheels carried by axle 13 to rotate. Going back to pipe 19, it feeds compressed air to co-generator 10, which produces electric energy; the latter is sent, through cable 20, to an electric motor which acts on differential gear 14 and gives a push to the drive wheels, carried by axle 13. Thereby, the speed selected for the travel of vehicle 11 is kept partly by thermal engine 15, partly by the electric energy generated by co-generator 10. In practice, it is provided that motor vehicle 11 comprises an idle front axle 12 and a rear axle 13 which carries a differential gear 14. The electric energy produced by the transformation of said compressed air is used for supplying an electric motor which acts, in assistance to internal combustion engine 15, on differential gear 14. Part of the energy developed by engine 15, which would be wasted in conventional internal combustion engines, is instead recovered through the device 1 according to the present invention and used for maintaining the speed of vehicle 11 with a lesser use of engine 15. Thereby, the performances being equal, energy consumption is remarkably reduced and the production of carbon dioxide is reduced, too. As a matter of fact, it is possible to keep down the number of revolutions of engine 15 while increasing the yield in terms of speed and power.

Moving now to the embodiment shown in figs. 7A and 7B, the front axle 12' shown therein is normally, as in the prior art, an idle axle, the wheels whereof are caused to rotate by the movement of vehicle 11, due to the thrust of the drive wheels. As said before, on this axle 12' an electric motor 21 is mounted. Normally, electric motor 21 is not active, leaving that axle 12' rotates idly. The electric energy produced by co-generator 10, in this case, is accumulated. However, there are cases in which the vehicle could have difficulties of movement: for example, the wheels carried by axle 12' could be covered stuck in mud or snow and could have troubles gripping onto the ground, so as to slip. In similar cases, but possibly also in others, it would be suitable for the wheel which lacks grip to be the drive wheel. This is what this embodiment allows to obtain. As a matter of fact, it is possible to give a suitable - manual or automatic - control which causes the electric energy, produced by cogenerator 10 and accumulated, to be instead sent to electric motor 21 which stops rotating idly and imparts, through an epicycloid gear, an active movement to axle 12' and so to the wheels carried thereby. Thereby, the wheel can have an even remarkable thrust and four wheel drive can be obtained on a normally conventionally driven vehicle (two wheel drive), thus moving to a four or even six wheel drive configuration. Normally, this required thrust is of a very short duration, however, it is possible to dimension the accumulators so as to be able to use the energy produced for even relatively long portions, up to a few hundred meters or even a few kilometres. It can hence be considered that this embodiment falls within a type of light hybridation vehicle. This embodiment can provide an intervention of electric motor 21 also in the other steps which require a higher consumption, like, for example, upon starting of the vehicle or when a sudden and steep slope lies ahead. Moreover, this embodiment allows a four-wheel drive, with no need for high-pressure fluids, thus reducing the complexity and the risks normally connected with high pressure.

The starting and stopping of electric motor 21 can occur manually or automatically, when an electronic central unit detects the need therefor.

It can also be assumed to combine the two just described embodiments in connection with figs. 5, 7A and 7B, so as to obtain a low-consumption vehicle, capable of having the thrust by four-wheel drive in case of necessity. However, the choice of a light hybridation is a winner, since full hybridation is difficult to implement in heavy vehicles today, according to the technological knowledge. Moreover, an adjustment of existing heavy vehicles according to the present invention would be prohibitively costly for most potentially interested subjects.

In all embodiments other energy recovery systems can be provided, to be combined with the system claimed, like an electromagnetic braking system, any MGU-H or MGU-K units and others: thereby, the energy saving is certainly higher.

The present invention hence allows to save fuel and/or to have a possible temporary four-wheel-drive effect, said effect without the need for a dedicated fuel consumption, despite having a full and advantageous effect.

The arrangement of cardanic joint 22, arranged between the attachment 5 of the power take-off unit 4 and compressor 9, inclined by about 60°, will allow to mount device 1 and the other necessary components on standard, already existing vehicles, so as to be able to modify them in order to show the features according to the present invention. As a matter of fact, it has been surprisingly found that an arrangement with different angles allows neither to maintain the spaces existing today nor to obtain the same yield and the same energy recovery.

The advantages of the present invention are: high power with reduced number of revolutions, reduced heat generation, energy self-sufficiency, activation upon need (for the embodiment illustrated in figs. 7A and 7B), reduced wear and maintenance.

However, it is understood that the invention must not be considered limited to the particular arrangement illustrated above, which makes up only an exemplifying embodiment thereof, but that different variants are possible, all within the reach of a person skilled in the field, without departing from the scope of protection of the invention, as defined by the following claims.

### LIST OF REFERENCE CHARACTERS

- 1: Device for energy recovery
- 2: Attachment to engine (of 1)
- 4: Power take-off unit
- 5: Attachment joint (of 4)
- 6: Transmission area (of 4)
- 7: Turbine
- 8: Input (of 7)
- 9: Compressor
- 10: Co-generator
- 11: Motor vehicle
- 12, 12': Front axle (of 11)
- 13: Rear axle (of 11)
- 14: differential gear (of 13)
- 15: Engine (of 11)
- 16: Gearbox
- 17: Cardan
- 18: Transmission of kinetic energy
- 19: Compressed air pipe
- 20: Electric supply line
- 21: Electric motor (of 12')
- 22: Cardanic joint
- 23: Actuation motor
- 24: Axis of the attachment joint
- α: Angle between 22 and 24

## Claims

1. Energy recovery device (1) to be arranged between the attachment (2) to the engine and the clutch of a vehicle (11) comprising:
a power take-off unit (4) with a fastening joint (5),
a compressor (9) for the production of compressed air,
an actuation motor (23) of said compressor (9),
a cardanic joint arranged between the the fastening joint (5) and the actuation motor (23), the power take-off unit (4) being connected through the fastening joint (5) to the compressor for the production of compressed air the cardanic joint arranged between the fastening joint (5) of the power take-off unit (4) and the actuation motor (23) of said compressor is arranged with an angle (α) between said cardanic joint (22) and the axis of said fastening joint (5) ranging between 40° and 80°.

2. Device (1) as in claim 1), **characterised in that** the power take-off unit (4) comprises an area (6), also operationally connected to the rotating members of the engine.

3. Device (1) as in claims 1) or 2), **characterised in that** it comprises a cogenerator (10), which can generate electric energy due to the action of the compressed air introduced thereinto, through a turbine (7), by the compressor (9).

4. Device (1) as in any claim 1) to 3), **characterised in that** the compressor (9) receives its movement from the fastening joint (5) of the take-off unit (4).

5. Motor vehicle (11), propelled by an internal combustion engine, comprising an energy recovery device (1) according to any claim 1) to 4).

6. Motor vehicle (11) as in claim 5), **characterised in that** the power take-off unit (4) is arranged with an angle of 60° with respect to the engine.

7. Motor vehicle (11) as in any one of the preceding claims 5) or 6), **characterised in that** other energy recovery systems are provided, to be combined with the claimed system, such as an electromagnetic braking system, possible MGU-H or MGU-K units.

## Patentansprüche

1. Energierückgewinnungsvorrichtung (1), die zwischen dem Anschluss (2) an den Motor und der Kupplung eines Fahrzeugs (11) angeordnet werden soll, umfassend:
eine Abtriebseinheit (4) mit einer Befestigungsverbindung (5)
einen Kompressor (9) zur Erzeugung von Druckluft,
einen Antriebsmotor (23) des Kompressors (9),
eine kardanische Verbindung, die zwischen der Befestigungsverbindung (5) und dem Antriebsmotor (23) angeordnet ist,
wobei die Abtriebseinheit (4) über das Befestigungsgelenk (5) mit dem Kompressor zur Erzeugung von Druckluft verbunden ist, wobei das zwischen dem Befestigungsgelenk (5) der Abtriebseinheit (4) und dem Antriebsmotor (23) des Kompressors angeordnete kardanische Gelenk mit einem Winkel (α) zwischen dem kardanischen Gelenk (22) und der Achse des Befestigungsgelenks (5) im Bereich zwischen 40° und 80°.

2. Vorrichtung (1) wie in Anspruch 1), **dadurch gekennzeichnet, dass** die Abtriebseinheit (4) einen Bereich (6) umfasst, der ebenfalls betriebsmäßig mit den rotierenden Elementen des Motors verbunden ist.

3. Vorrichtung (1) gemäß Anspruch 1 oder 2, **dadurch gekennzeichnet, dass** sie einen Kogenerator (10) umfasst, der durch die Wirkung der durch den Kompressor (9) in ihn eingeleiteten Druckluft über eine Turbine elektrische Energie erzeugen kann.

4. Vorrichtung (1) gemäß einem der Ansprüche 1) bis 3), **dadurch gekennzeichnet, dass** der Kompressor (9) seine Bewegung von der Befestigungsverbindung (5) der Abtriebseinheit (4) erhält.

5. Kraftfahrzeug (11), das von einem Verbrennungsmotor angetrieben wird und eine Vorrichtung zur Energierückgewinnung (1) gemäß einem der Ansprüche 1) bis 4) umfasst.

6. Kraftfahrzeug gemäß Anspruch 5), **dadurch gekennzeichnet, dass** die Abtriebseinheit (4) in einem Winkel von 60° in Bezug auf den Motor angeordnet ist.

7. Kraftfahrzeug gemäß einem der vorstehenden Ansprüche 5 oder 6, **dadurch gekennzeichnet, dass** andere Energierückgewinnungssysteme vorgesehen sind, die mit dem beanspruchten System kombiniert werden können, wie beispielsweise ein elektromagnetisches Bremssystem, eine mögliche MGU-H oder MGU-K.

## Revendications

1. Dispositif (1) de récupération d'énergie devant être agencé entre la fixation (2) au moteur et l'embrayage d'un véhicule comprenant :
une unité de prise de force (4) avec une articulation de fixation (5),
un compresseur (9) pour la production d'air comprimé,
un moteur d'actionnement (23) dudit compresseur (9),
une articulation de cardan agencée entre l'articulation de fixation (5) et le moteur d'actionnement (23),
l'unité de prise de force (4) étant
reliée par le biais de l'articulation de fixation (5) au compresseur pour la production
d'air comprimé, l'articulation de cardan agencée entre l'articulation de fixation (5) de l'unité
de prise de force (4) et le moteur d'entraînement (23) dudit compresseur
est agencée à un angle (α) entre ladite articulation de cardan (22) et l'axe de ladite articulation de fixation (5) s'inscrivant
entre 40° et 80°.

2. Dispositif (1) selon la revendication 1), **caractérisé en ce que** l'unité de prise de force (4) comprend une zone (6), également reliée fonctionnellement aux organes rotatifs du moteur.

3. Dispositif (1) selon les revendications 1) ou 2), **caractérisé en ce qu'**il comprend un cogénérateur (10), qui peut générer de l'énergie électrique en raison de l'action de l'air comprimé introduit dans celui-ci, par le biais d'une
turbine (7), par le compresseur (9).

4. Dispositif (1) selon l'une des revendications 1) à 3), **caractérisé en ce que** le compresseur (9) reçoit son mouvement de l'articulation de fixation (5) de l'unité de prise de force (4).

5. Véhicule à moteur, propulsé par un moteur à combustion interne, comprenant un dispositif (1) de récupération d'énergie selon l'une des revendications 1) à 4).

6. Véhicule à moteur selon la revendication 5), **caractérisé en ce que** l'unité de prise de force (4) est agencée à un angle de 60° par rapport au moteur.

7. Véhicule à moteur selon l'une des revendications 5) ou 6) précédentes, **caractérisé en ce que** d'autres systèmes de récupération d'énergie sont prévus, pour être combinés avec le système revendiqué, tels qu'un système de freinage électromagnétique, des unités MGU-H ou MGU-K possibles.
